# EUROPEAN PATENT APPLICATION

(11) **EP 4 748 515 A1**
(43) Date of publication of application: **27.05.2026**
(21) Application number: 25213184.2
(22) Date of filing: 04.11.2025
(51) Int. Cl.: B22F 3/11, B22F 5/08, B22F 7/06, B22F 10/28, B23K 20/12, B33Y 10/00, B33Y 80/00, F16H 55/06, F16H 57/04

(54) **ADDITIVELY MANUFACTURED GEARS FOR AEROSPACE AND DEFENSE**

(30) Priority: 04.11.2024 US 202418936540
(71) Applicant: Lockheed Martin Corporation, Bethesda, Maryland 20817 (US)
(72) Inventor: Patry, Ryan, Oxford, CT, 06478 (US); Tenneti, Kishore Kumar, Stratford, CT, 06615 (US); Gmirya, Yuriy, Straftford, CT, 06615 (US); West, Michael Walter, Stratford, CT, 06615 (US); Rivera Almeyda, Oscar Gabriel, Stratford, CT, 06615 (US)
(74) Representative: Schmitt-Nilson Schraud Waibel Wohlfrom Patentanwälte Partnerschaft mbB

(57) **Abstract**

A gear for transmitting motion and torque between components includes a first gear portion having a first material and which is formed by a first additive manufacturing process. The gear also includes a second gear portion having a second material and which is formed on the first gear portion. The second gear portion is formed by a second additive manufacturing process that is different from the first additive manufacturing process. At least one of the first gear portion or the second gear portion defines a plurality of teeth.

## Description

The present disclosure relates generally to the field of gears used to transmit motion and torque between components. More specifically, the present disclosure relates to methods of manufacturing gears.

Gears are used in a wide variety of applications, such as power handling systems including transmissions in automobiles, industrial machinery, and aircraft. For example, and in aircraft applications, gears may be used to transmit rotation and torque from the engine to various components, including rotary drive systems and/or gear trains.

One aspect of the present disclosure relates to a gear. The gear includes a first gear portion having a first material and which is formed by a first additive manufacturing process. The gear also includes a second gear portion having a second material and which is formed on the first gear portion. The second gear portion is formed by a second additive manufacturing process that is different from the first additive manufacturing process. At least one of the first gear portion or the second gear portion defines a plurality of teeth.

Another aspect of the present disclosure relates to a method of making a gear. The method includes forming a first gear portion using a first material by a first additive manufacturing process; forming a second gear portion by depositing a second material on the first gear portion using a second additive manufacturing process that is different from the first additive manufacturing process and so that the second gear portion extends from the first gear portion; and forming a plurality of teeth into one of the first gear portion or the second gear portion.

Yet another aspect of the present disclosure relates to a method of repairing a gear. The method includes depositing material onto a local area of the gear that was previously occupied by material worn away during operation. The method includes depositing the material by an additive manufacturing process. The method also includes subtractively manufacturing the material to define a first portion of the gear having less wear as compared to a second portion of the gear that is disposed at a different location along the gear than the first portion.

This summary is illustrative only and should not be regarded as limiting.

### BRIEF DESCRIPTION OF THE DRAWINGS

The disclosure will become more fully understood from the following detailed description, taken in conjunction with the accompanying figures, wherein like reference numerals refer to like elements, in which:
FIG. 1 is a side view of a rotary wing aircraft, according to an embodiment.
FIG. 2 is a side view of a bevel gear formed from a hybrid manufacturing process, according to an embodiment.
FIG. 3 is a perspective view of an additive friction stir deposition process, according to an embodiment.
FIG. 4 is a perspective view of a laser powder bed fusion process, according to an embodiment.
FIG. 5 is a side cross-sectional view of a bevel gear that is formed from a hybrid manufacturing process, according to an embodiment.
FIG. 6 is a partial top view of the bevel gear of FIG. 5.
FIG. 7 is a partial side cross-sectional view of the bevel gear of FIG. 5.
FIG. 8 is a perspective view of a gear inclusive of multiple sets of gear teeth formed from a hybrid manufacturing process, according to an embodiment.
FIG. 9 is a perspective view of a gear formed from a hybrid manufacturing process, according to another embodiment.
FIG. 10 is a flow diagram of a method of manufacturing a gear using a hybrid manufacturing process, according to an embodiment.
FIG. 11 is a flow diagram of a method of repairing a gear using an additive manufacturing process, according to an embodiment.

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and made part of this disclosure.

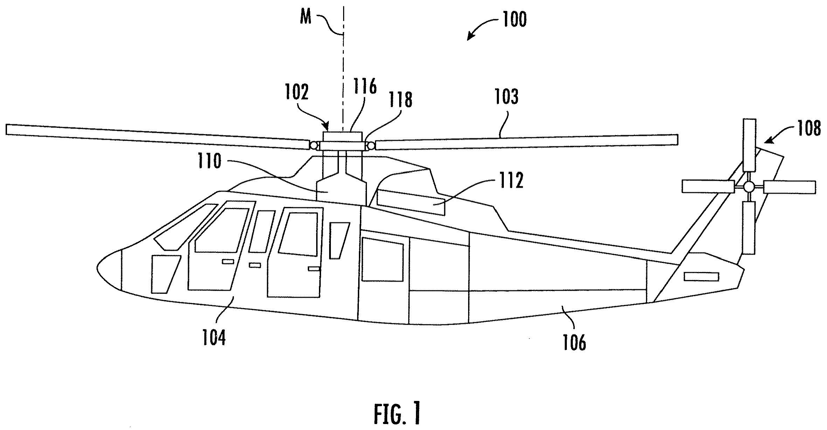

Gears, and particularly gears used in aerospace and defense applications, are used to transmit power from an engine to various components. For example, FIG. 1 depicts a rotary wing aircraft 100 (e.g., an airframe, an aircraft, a rotorcraft, etc.) that includes multiple rotating components that provide lift and maneuverability to the aircraft 100. The aircraft 100 includes a main rotor assembly 102 to power the main rotor blades 103 of the aircraft 100. The aircraft 100 also includes an anti-torque system, such as a tail rotor assembly 108, mounted to a tail end portion of the aircraft 100. The main rotor assembly 102 is driven about a rotor axis of rotation M through a first transmission 110 by one or more motors, shown in FIG. 1 as motor 112. The tail rotor assembly 108 is driven about a second motor axis that is substantially perpendicular to the motor axis M that is driven through a second transmission by the motor 112 or a second motor that is separate from the motor 112. In some embodiments, the second transmission includes a gear train that extends from the first transmission. The aircraft 100 may also include other driven components (e.g., a hydraulic pump, etc.) that may be driven by the first transmission 110, the second transmission, and the motor 112. While the aircraft 100 shown is a helicopter with a single main rotor assembly 102, aspects of the present disclosure can be used in other types of aircraft, including coaxial aircraft, aircraft using propulsors, tilt rotor and tilt wing aircraft, and multi-engine aircraft.

Each of the first transmission 110 and the second transmission include gears made from steel alloys or other metallic materials and having complex machined parts/portions that require custom raw material forms, unique special processing, and extremely accurate geometries. Due to the required strength and durability, the gears onboard the aircraft 100 can constitute a considerable portion of the weight of the aircraft 100. The design geometries for these types of gears are constrained by the manufacturing process, such as casting, which can make it challenging to tailor the gear design for weight. Although described herein with respect to aircraft applications, it should be understood that the inventive principles disclosed herein are also applicable to gears used in other applications, such as in automotive applications, marine applications, and others.

Challenges that can arise during the gear design process include balancing producibility of the gear with the desire for a lightweight high-performance solution. A gear must support multiple performance areas. A hard outer surface is needed at the gear teeth to resist the constant impact from tooth-on-tooth contact. Additionally, the core material of the gear may need to be softer than the outer surface of the gear teeth to absorb the gear tooth impact and improve durability. Lastly, high wear resistance can be desirable on bearing surfaces to provide support during constant rotation. To accommodate prolonged operation at rotational speeds for various applications, tuning may be necessary to avoid resonance and/or for vibration attenuation at operating frequencies for the gear. Improvements in the design of the gear are also desired to improve lubrication (e.g., cooling, etc.) and to ensure stable operation and prevent overheating at various speeds and operating temperatures.

Conventional gear manufacturing processes, such as forging, machining, and grinding, can also increase the required development time for various gear geometries. Additionally, because these methods, once developed, are configured to produce a whole gear as a single piece or multiple large sections, repairing gears that have been damaged during use or that suffer defects/damage during the manufacturing process can be extremely challenging or infeasible. As a result, gears at overhaul may have few options to return to service if they show signs of significant wear.

Embodiments of the present disclosure relate to a hybrid manufacturing process for manufacturing gears that can reduce the lead time, machining time, and weight of gears. In particular, embodiments of the present disclosure relate to a hybrid manufacturing process for a gear that includes multiple different additive manufacturing processes. The different additive manufacturing processes are used to form different parts/portions of the gear, which can enable production of gears with different material properties (even when using the same materials) across various portions of the gear and that are adapted to better suit performance requirements that are unique to these portions. For example, the hybrid manufacturing process may include using a first additive manufacturing process to form a first gear portion, such as a shaft or base structure of the gear. The first additive manufacturing process may be adapted to deposit material having increased hardness and structural durability. The hybrid manufacturing process may also include using a second additive manufacturing process to form a second gear portion of the gear onto the first gear portion, such as a core region of the gear that extends between the shaft and engaging elements (e.g., teeth, etc.) along the gear. The second additive manufacturing process may be adapted to deposit material that is softer than the first gear portion to absorb impacts across the outer surfaces of the gear. In some embodiments, the second manufacturing process may be adapted to produce finer features than the first additive manufacturing process, such as thin-walled channels, a lattice, or web to facilitate weight reducing and improve lubrication retention and distribution during use.

As will be further described, the hybrid manufacturing process can be utilized to improve performance of the gear and can also enable significant weight savings. The additive manufacturing techniques of the present disclosure, which are digitally controlled, can also reduce development lead time by eliminating the need to develop different complex and costly physical tooling to make forgings for different applications and gear geometries. A near net (e.g., a near completely, etc.) additively manufactured raw material gear form can be produced quickly relative to existing techniques, even for complex designs, which can greatly simplify the entire manufacturing process, including machining, processing and grinding.

The hybrid manufacturing techniques described herein can also enable repair of worn or damaged gears to be salvaged and brought back into service without having to reproduce the gear in its entirety. For example, the first additive manufacturing process and/or the second additive manufacturing process can be used to deposit material in local areas across the gear that have been damaged or worn away. The repair method may include selection of the additive manufacturing process depending on required characteristics across the worn or damaged region of the gear. Such solutions can improve sustainment opportunities for the customer by reducing the cost associated with maintenance/repair, without sacrificing gear performance. The use of multiple different additive manufacturing techniques can also enable repair of different alloys used in the gear, and using processes that are adapted for the specific purposes of the repaired gear portion (e.g., material hardness, region geometry, etc.). According to various embodiments, generally, in the method of making a gear, the first gear portion is formed by an additive friction stir deposition process and the second gear portion is formed by a laser powder bed fusion process. According to various embodiments, generally, forming the first gear portion comprises forming an interface feature that includes at least one of a shaft or the plurality of teeth, and forming the second gear portion comprises forming a non-interface feature having a reduced wall thickness relative to a wall thickness of the at least one of the shaft or the plurality of teeth. According to various embodiments, generally the method of repairing a gear may further comprise subtractively manufacturing a portion of the gear to define the local area.

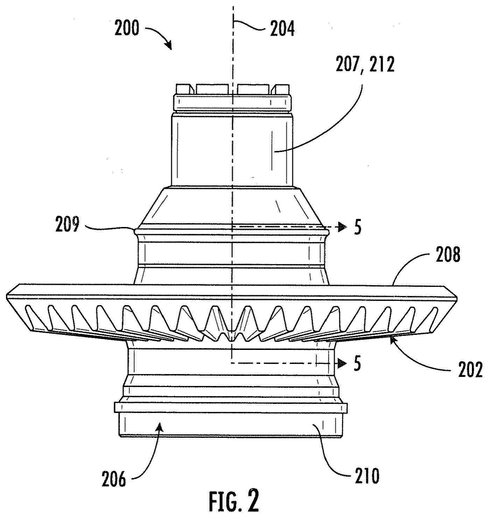

FIG. 2 depicts an example gear 200, according to an embodiment. In the embodiment of FIG. 2, the gear 200 is a bevel gear for an aircraft application that is configured to transmit power from an engine along a rotational direction that is different from a rotational direction of a mating gear (e.g., about 90 degrees, about 70 degrees, about 45 degrees, etc.). In some embodiments, the gear 200 is formed as a spiral bevel gear that includes a plurality of spiral shaped (e.g., helically shaped) teeth 202. In other embodiments, the shape of the teeth may be different. For example, the plurality of teeth 202 may include straight teeth extending radially outward from a rotational axis 204 of the gear 200. In other embodiments, the geometry of the teeth may be different, including curved or forming a herringbone pattern.

In the embodiment of FIG. 2, the gear 200 includes a first gear portion 206 formed by a first additive manufacturing process and a second gear portion 208 extending from the first gear portion 206 that is formed by a second additive manufacturing process that is different from the first additive manufacturing process. In at least one embodiment, the first manufacturing process and the second additive manufacturing process are adapted for the specific gear geometry and structure that are associated with the first gear portion 206 and the second gear portion 208, respectively.

For example, the first additive manufacturing process may be configured to deposit material having a greater hardness and/or strength than the second additive manufacturing process. In such embodiments, the first gear portion 206 may define an interface feature 207 of the gear 200 that is configured to define an interface surface that engages other components of the transmission during operation. For example, the first gear portion 206 may include a shaft 210 having at least one bearing surface, shown as bearing surface 212. In other embodiments, the first gear portion may include teeth extending along the shaft 210. The first additive manufacturing process may be configured to deposit material having greater hardness and/or strength relative to other types of additive manufacturing processes, which can improve wear resistance of contact surfaces between the gear 200 and other components, such as by reducing wear associated with the constant tooth-on-tooth contact between the gear 200 and other components during operation.

In some embodiments, the first additive manufacturing process may be configured to deposit a surface coating onto various portions of the gear 200. For example, the first additive manufacturing process may include depositing a single, or multiple, layers of material across a region of the gear 200 that defines the plurality of teeth 202, and/or across the bearing surface(s) (e.g., the bearing surface 212) to increase hardness at the interface between the gear 200 and other components.

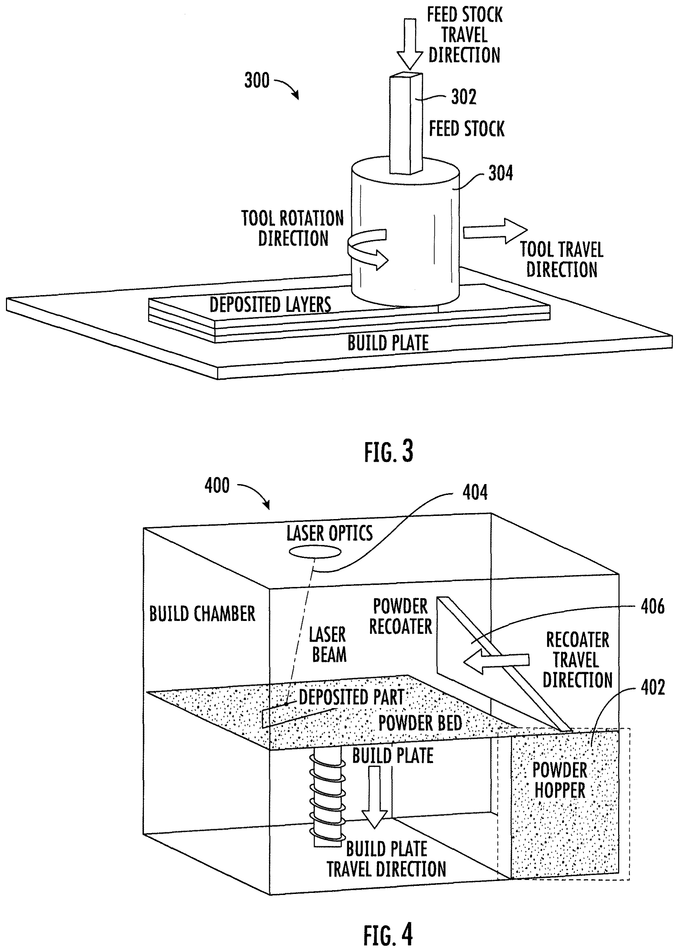

Referring to FIG. 3, in some embodiments, the first additive manufacturing process is an additive friction stir deposition (AFSD) process 300. The AFSD process 300 may be a MELD process that is configured to deposit material in a solid-state (e.g., without fully melting the material, etc.). During the AFSD process 300, a solid feed substrate (e.g., a feed stock, etc.), shown as rod 302, is advanced through a hollow rotating tool 304 to a target region, such as across a build plate (e.g., a support structure, etc.) and/or a surface of an existing gear (e.g., the second gear portion, etc.).

The rotational force imparted to the rod 302 by the rotating tool 304 smears and sticks the material of the rod 302 via friction to the base component, plastically deforming the material to form a layer along the target region. The substrate (e.g., the rod 302) may include a steel alloy or another metallic material. The AFSD process 300 can enable production of multi-material gear raw forms that can be machined (e.g., 100% machined), processed, and formed into a final shape. The AFSD process 300 is particularly well-suited for forming surfaces coatings (e.g., local coatings along a portion of the gear on top of existing geometry, local coatings built up on top of existing geometry) and/or regions of increased material hardness and with lower residual stresses due to the solid-state nature of the AFSD process 300. The AFSD process 300 can also reduce energy requirements relative to other laser-based three-dimensional (3D) printing methods, and can enable higher material deposition rates, which can reduce manufacturing costs relative to producing the entire gear by laser-based printing methods.

Referring again to FIG. 2, in some embodiments, the second additive manufacturing process is configured to deposit material having reduced hardness relative to the first additive manufacturing process, and/or to produce finer features having reduced wall thickness and/or dimensional variation relative to the first additive manufacturing process. In such embodiments, the second gear portion 208 may define a non-interface feature 209 of the gear 200 that is spaced apart from contact surfaces of the gear 200 (e.g., surfaces of the gear 200 that are configured to engage with other components, etc.) and/or that is configured to facilitate lubrication of the gear 200 during operation. In some embodiments, the non-interface feature 209 has a reduced wall thickness relative to the at least one of the shaft 210 and/or the plurality of teeth 202.

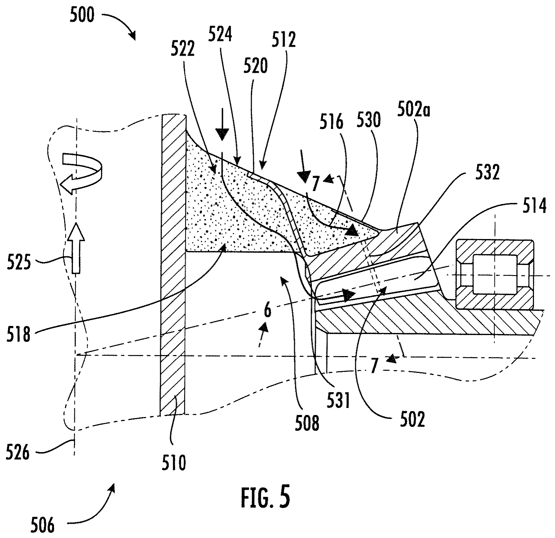

In some embodiments, the second gear portion 208 includes a lattice structure (e.g., a web, a matrix defining multiple internal cavities, etc.) of core material that connects the shaft 210 to an outer ring of material defining the plurality of teeth 202, as will be described in more detail below with respect to FIG. 5. In some embodiments, the second gear portion 208 also includes a portion of the plurality of teeth 202 that extends away from the first gear portion 206. For example, the second gear portion 208 may define a region of the plurality of teeth 202 that is softer than the outer surface of the gear teeth, which can facilitate absorption of gear tooth impact and improve the overall durability of the gear. As used herein, "softer" refers to a material with reduced hardness (e.g., a reduced Rockwell hardness based on indentation hardness of the material in dimensionless units of HRC, etc.).

In some embodiments, the second gear portion 208 may additionally or alternatively form a support structure adjacent to the bearing surface(s) (e.g., the bearing surface 212) that has a reduced hardness relative to the bearing surface(s). Beneficially, such an arrangement can improve support under loading and increase the fatigue life of the gear 200. It should be understood that the first gear portion 206 and the second gear portion 208 may form different parts/portions of the gear 200 in different embodiments and depending on application-specific requirements.

Referring to FIG. 4, in some embodiments, the second additive manufacturing process is a laser powder bed fusion (LPBF) process 400. The LPBF process 400 is configured to deposit (and/or cause to be deposited) a substrate (e.g., a feed stock, etc.) in the form of a powder 402 onto a target region (e.g., a base plate, a support structure, an existing material, the first gear region formed from the first additive manufacturing process, etc.), and to fuse the particles in the powder 402 layer-by-layer to form a solid part.

As shown in FIG. 4, the LPBF process 400 also includes a heat source, shown as a laser 404, that is configured to fuse the particles together. During operation, a powder recoater 406 distributes the powder 402 from a hopper in an approximately even layer across the base structure and/or part. The laser 404 applies heat to the powder layer, fusing (e.g., sintering) the powder 402 and forming a layer of solid material. After the layer is fully fused, the base structure and/or part is repositioned (e.g., farther away from the laser 404) and another layer of powder 402 is applied to the solid layer by the powder recoater 406.

In some embodiments, the LPBF process 400 includes multiple heat sources (e.g., lasers and/or electron beams) to fuse the metallic powder. The LPBF process 400 may be a selective laser sintering (SLS) process, a selective laser melting (SLM) (e.g., a direct metal laser sintering (DMLS)) process, an electron beam melting (EBM) process, and/or another type of laser-sintered and/or powder fusion operation and/or process, alone or in any combination.

Among other benefits, and as a result of the use of powder instead of a solid substrate, the LPBF process 400 can allow for production of more complex geometries and intricate details as compared to the AFSD process, and can also improve dimensional accuracy and precision (e.g., the LPBF process can reduce dimensional variance relative to other additive manufacturing techniques). For example, the LPBF process 400 can be used to fabricate a gear raw form with fine features (e.g., pockets, lattice structures, iso-grid patterns, or a combination of any thereof, etc.) without machining, or can also be locally machined, processed, and formed into a final shape. Accordingly, in at least one embodiment, the LPBF process is employed to fabricate a gear raw form having one or more of a pocket, a lattice, a grid structure, etc., without machining.

It should be understood that in other embodiments, the exact processes used for the first additive manufacturing process and the second additive manufacturing process may be different. For example, the first additive manufacturing process may be a different form of an LPBF process 400 as the second additive manufacturing process (e.g., SLS vs. EBM, etc.). All such combinations of different additive manufacturing processes should be considered within the scope of the present disclosure.

Referring to FIG. 5, a side cross-sectional view through an example bevel gear 500 formed using a hybrid manufacturing process is shown, according to an embodiment. Aspects of the gear 500 may be the same or different from the gear 200 described with reference to FIG. 2. In the embodiment of FIG. 5, the gear 500 includes a first gear portion 506 and a second gear portion 508 that extends form the first gear portion 506. The first gear portion 506 is formed by a first additive manufacturing process and the second gear portion 508 is formed by a second additive manufacturing process that is different from the first additive manufacturing process.

In the embodiment of FIG. 5, the first gear portion 506 includes interface features of the gear 500. For example, the first gear portion 506 includes at least a portion of a shaft 510 and at least one material layer defining an outer surface (e.g., an interface surface, etc.) of a plurality of teeth 502. The first gear portion 506 may be formed (e.g., deposited, etc.) by an AFSD process, which can provide increased material strength and durability for such interface features.

In some embodiments, the second gear portion 508 includes non-interface features of the gear 500 that extend from the interface features (e.g., from the first gear portion 506, etc.). In the embodiment of FIG. 5, the second gear portion 508 defines a lattice structure 512 (e.g., a web region, etc.) that extends from the shaft 510 to an outer ring 514 of the gear 500 that circumscribes the shaft 510. The outer ring 514 defines the plurality of teeth 502. The lattice structure 512 extends between the outer ring 514 to the shaft 510.

In some embodiments, the lattice structure 512 includes a plurality of partition walls, shown as a first partition wall 520 and a second partition wall 530, that together define a plurality of internal cavities 518 (e.g., pockets, voids, lacunae, etc.) within the lattice structure 512. In some embodiments, the plurality of partition walls are non-structural walls that extends between regions that structurally support the outer ring 514 with respect to the shaft 510. In some embodiments, the internal cavities 518 define recessed areas between the shaft 510 and the outer ring 514 (e.g., openings, etc.) that are structured to guide fluid, such as coolant or a lubricant (e.g., oil) to cooling channels (e.g., a lubricant channel, lubrication orifice, passageway, etc.) through the plurality of teeth 502.

In the embodiment of FIG. 5, the second gear portion 508 defines at least one partition wall, shown as a first partition wall 520, of an open lubricant reservoir 522 (e.g., an open oil reservoir, etc.) that is configured to collect the lubricant along an outer surface of the gear 500 during operation. The open lubricant reservoir 522 includes an open end 524 that faces along an axial direction 525 relative to a rotational axis 526 of the shaft 510, which facilitates retention of the lubricant within the open lubricant reservoir 522 during operation (e.g., under the centripetal force resulting from rotation of the gear 500).

In the embodiment of FIG. 5, the second gear portion 508 includes the plurality of partition walls that are configured to facilitate retention and redistribution of the lubricant 516, from the outer surface of the gear 500, to the lubricating channels of the gear 500. In other embodiments, the second gear portion 508 may include only one of the two partition walls extending axially away from the outer surface of the gear 500.

The first partition wall 520 is disposed within the lattice structure 512 (e.g., the web region, etc.) formed by the second gear portion 508 between the shaft 510 and at least one tooth 502a of the plurality of teeth 502. In the embodiment of FIG. 5, a proximal end (e.g., a first end, etc.) of the first partition wall 520 is disposed adjacent to an inner diameter of the at least one tooth 502 and extends substantially axially away from the outer ring 514 and the at least one tooth 502a. A distal end (e.g., a second end, etc.) of the first partition wall 520 is curved radially inward toward the rotational axis 526, which can facilitate retention of the lubricant within the open lubricant reservoir 522. Such an arrangement can also direct the lubricant that is trapped within the open lubricant reservoir 522 toward the lubrication channels, openings, etc. during rotation (e.g., responsive to the centripetal force applied to the lubricant by the gear 500 during rotation).

A second partition wall 530 of the plurality of partition walls is disposed region of the gear 500 that is disposed radially between an inner perimeter of the at least one tooth 502a of the plurality of teeth 502 and an outer perimeter of the at least one tooth 502a. The second partition wall 530 is an angled wall that extends from the outer ring 514 toward the rotational axis 526 of the shaft 510, which, similar to the curved distal end of the first partition wall 520, facilitates oil retention and redistribution to regions within the gear 500.

In some embodiments, at least one of the first partition wall 520 or the second partition wall 530 extend at an angle relative to the radial direction across the gear 500. For example, the first partition wall 520 and/or the second partition wall 530 may extend in a spiral (e.g., a helical) shape across the outer surface of the gear 500 so as to form at least one cavity (e.g., recessed area, depression, scooped-out portions, etc.) along the outer surface, which can facilitate capture of the lubricant from splashing and/or misting of the lubricant within the gearbox/transmission. For example, the first partition wall 520 and/or the second partition wall 530 may be shaped similarly to a blade (e.g., a fin, a louver, etc.) of a centrifugal compressor impeller. The wall 520 and/or 530 can be shaped so as to share a common profile or contour as the blade. The blade may be curved in a helical shape with a closed end so as to scoop or draw lubricant into at least one cavity along the outer surface that is defined by the blade during rotation of the gear. In such a case, wall 520 and/or 530 would likewise be curved in a comparable fashion.

Referring to FIGS. 5-6, the first gear portion 506 and/or the second gear portion 508 define a first lubrication opening, shown as a lubrication orifice 531 that extends through an outer surface of the gear 500 (e.g., through an area of the gear 500 between the first gear portion 506 and the at least one tooth 502a). The lubrication orifice 531 extends through the gear in the region between the teeth and the shaft 510. The lubrication orifice 531 may be one of a plurality of lubrication orifices that are spaced apart from one another along a circumferential direction about the gear 500.

Referring again to FIG. 5, the first gear portion 506 and/or the second gear portion 508 also define a second lubrication opening, shown as a lubrication channel 532 that extends from the open lubricant reservoir 522, through the outer surface of the gear 500 (e.g., through the second gear portion 508) and directly to the teeth 502 (e.g., the gear mesh, an outer surface of the at least one tooth 502a, etc.).

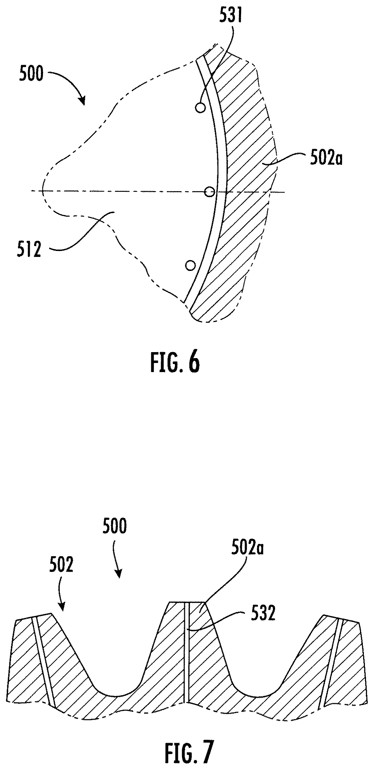

Referring to FIG. 7, in some embodiments, the lubrication channel 532 also extends through the at least one tooth 502a to an outer surface of at least one tooth 502a and/or to surfaces of other portions of the gear 500. The channel 532 extends through a central portion of the at least one tooth 502a to an outer surface at the tip of the at least one tooth 502a. Such an arrangement of the channel 532, through the center of the at least one tooth 502a, can help to maintain strength of the at least one tooth 502a under loading and can reduce stress along the root of the at least one tooth 502a where fracture can be more likely to occur. The shape of the channel 532 (e.g., the cross-sectional shape, etc.) can be different in various embodiments. In some embodiments, the location of the channel 532 through the at least one tooth 532a can also be different.

In some embodiments, at least a portion of the lubrication orifice 531 and/or the lubrication channel 532 is defined by the second gear portion 508 using an LPBF process, which is adapted to generate smaller and more complex geometries along the gear 500 relative to other additive manufacturing techniques. In other embodiments, the lubrication orifice 531 and/or the lubrication channel 532 may be formed using a subtractive manufacturing operation, such as a machining operation (e.g., drilling) through the first gear portion 506.

Although described in the context of a hybrid machining operation using two different additive manufacturing processes, it should be understood that a similar gear geometry as shown in FIG. 5 could be produced using a single additive manufacturing process, with similar benefits with respect to oil retention and distribution through the gear, as well as to provide a light-weight gear geometry due to the inclusion of the lattice structure 512. Such an arrangement, as described with respect to FIG. 5, can also provide passive lubrication to the gear 500 if the primary lubrication system becomes damaged or lubricant is lost.

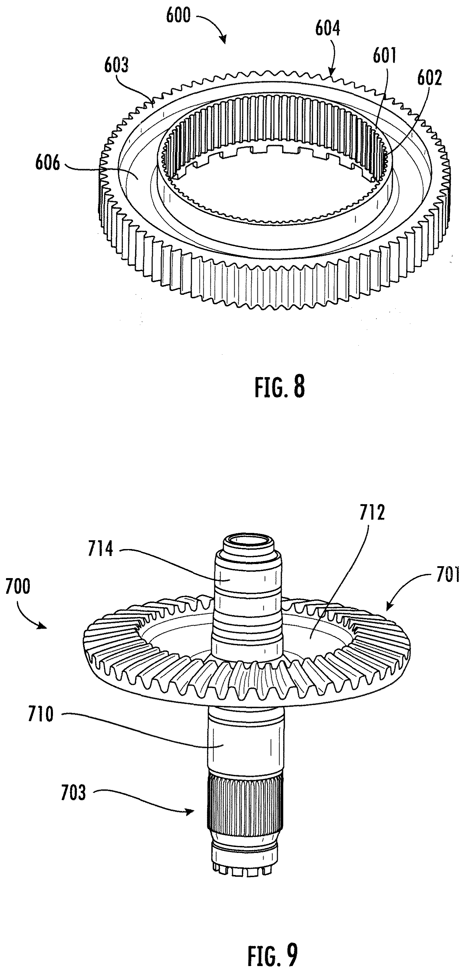

The first additive manufacturing process and the second additive manufacturing process may be applied in various combinations to produce different gear geometries. For example, referring to FIG. 8, a cylindrical hollow gear is shown as gear 600, according to an embodiment. The gear 600 includes an inner cylindrical wall 601 (e.g., a first cylindrical wall, etc.) defining a first plurality of gear teeth 602, an outer cylindrical wall 603 (e.g., a second cylindrical wall, etc.) defining a second plurality of gear teeth 604, and a web region 606 (e.g., a lattice structure, a radial support structure, etc.) extending between the inner cylindrical wall 601 and the outer cylindrical wall 603.

In the embodiment of FIG. 8, the inner cylindrical wall 601, the outer cylindrical wall 603, and the web region 606 are part of a first gear portion that is formed by a LPBF process, which enables production of a soft structure of core material that is configured to absorb gear tooth impact and improve durability.

The first plurality of gear teeth 602 extend axially along an inner perimeter surface of inner cylindrical wall 601. The second plurality of gear teeth 604 extend axially along an outer perimeter surface of the outer cylindrical wall 603 facing away from a rotational axis of the gear 600. In the embodiment of FIG. 8, the first plurality of gear teeth 602 and the second plurality of gear teeth 604 are at least partially formed by an AFSD process, which can provide greater hardness and mechanical strength due to tooth-on-tooth engagement between the gear 600 and other components. In some embodiments, the AFSD process is used to deposit the material for the first plurality of gear teeth 602 and the second plurality of gear teeth 604 onto the first gear portion (e.g., the web region 606). In other embodiments, the inner cylindrical wall 601 and/or the outer cylindrical wall 603 are also formed by the AFSD process, which can reduce or eliminate variations in material strength along the inner cylindrical wall 601 and the outer cylindrical wall 603.

In some embodiments, at least a portion of one of the inner cylindrical wall 601 or the outer cylindrical wall 603 are formed as a third gear portion deposited onto the gear 500 after forming both the first gear portion and the second gear portion. For example, the first gear portion (e.g., the web region 606) may be deposited onto a base structure by a first additive manufacturing operation (e.g., a LPBF process). The second gear portion, forming the first plurality of gear teeth 602, may be deposited onto the first gear portion by a second additive manufacturing operation (e.g., a AFSD process). The third gear portion, forming the second plurality of gear teeth 604, may be deposited onto the first gear portion by a third additive manufacturing operation that is the same or different from each of the first additive manufacturing operation and the second additive manufacturing operation. Such an operation can allow for the use of different materials and/or provide different material structural properties along each of the first gear portion, the second gear portion, and the third gear portion, depending on application requirements.

In some embodiments, the third additive manufacturing operation includes a cold spray operation. In such an embodiment, the third additive manufacturing operation may include forming a recess in the part (e.g., via a machining or other subtractive manufacturing operation), and depositing solid powder particles into the recess using, for example, a gas dynamic cold spray (GDCS) coating deposition method (e.g., in which powder particles are accelerated in a supersonic gas jet onto the substrate a velocities up to 500-1000 m/s, or another cold spray method. The powder may include metals, such as A1 7075 powder, ceramic, composite materials, and/or nanocrystalline powders of 1 to 50 micrometers in diameter, for example. In other embodiments, the powder may be deposited onto a surface directly without forming a recess. In other embodiments, the third additive manufacturing operation includes another type of additive manufacturing operation. For example, the third additive manufacturing operation may include one, or a combination of, a material jetting operation, binder jetting operation, sheet lamination, directed energy deposition, or another form of additive manufacturing for producing metallic components as currently known or hereafter devised.

FIG. 9 depicts another gear geometry made from a hybrid manufacturing process, shown as gear 700, according to an embodiment. The gear 700 includes both a bevel gear 701 and a splined shaft 703 that is connected to the bevel gear 701. The splined shaft 703 extends along an axial portion of a shaft 710 that also supports the bevel gear 701. In the embodiment of FIG. 9, the shaft 710 protrudes axially away from either side of the bevel gear 701 and defines multiple bearing surfaces for the gear 700.

In the embodiment of FIG. 9, at least a portion of the bevel gear 701 and/or the shaft 710 is defined by a first gear portion formed by a first additive manufacturing operation. For example, the bevel gear 701 may be formed at least partially from a LPBF process to define a web region 712 of the bevel gear 701, as described above.

At least a second portion of the shaft 710, shown as upper portion 714, is defined by a second gear portion formed by a second additive manufacturing operation that is different from the first additive manufacturing operation. For example, the upper portion 714 may be formed by an AFSD process by depositing cylindrical shaped layers of material on an axial end surface of the web region 712. Beneficially, such an arrangement can facilitate subtractive manufacturing operations (e.g., machining and/or other material removal operations, etc.) used to form the gear teeth along an outer ring of the bevel gear 701 by providing greater clearance for the machine tool. The AFSD can also produce bearing surfaces of the shaft 710 having a greater hardness relative to the web region 712.

It should be understood that the bevel gear 701 may also be formed from multiple gear portions via the use of different additive manufacturing operations depending on the desired structural characteristics of the gear 700.

Notwithstanding the embodiments described above in reference to FIGS. 1-9, various modifications and inclusions to those embodiments are contemplated and considered within the scope of the present disclosure.

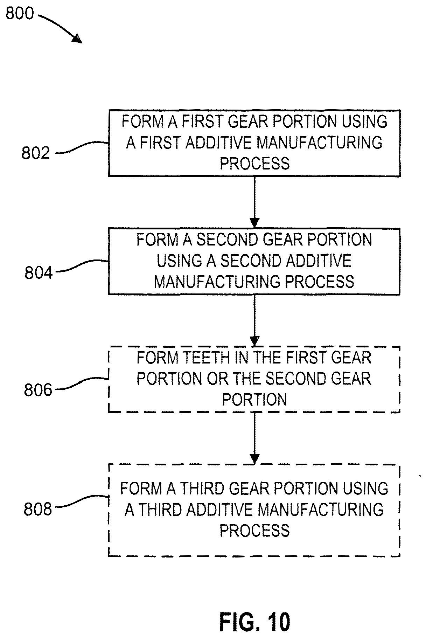

Referring to FIG. 10, a method 800 of making a gear is shown, such as any of the gear geometries described with reference to FIGS. 1-9, according to an embodiment. The method 800 may be implemented by one or more controllers of one or more subtractive manufacturing (e.g., machining, drilling, etc.) and/or additive manufacturing systems. In such implementations, the one or more controllers may include memory storing machine-readable instructions thereon, and a processor communicably coupled to the memory and configured to execute the machine-readable instructions to control operation of the machining and/or additive manufacturing systems (e.g., to carry out machining and/or additive manufacturing operations to form a gear, etc.).

At operation 802, a first gear portion is formed by a first additive manufacturing process. In some embodiments, operation 802 includes forming an interface feature of a gear, such as a shaft by an AFSD process, which can provide greater strength and hardness to areas of the gear that interface with (e.g., engage) other components during operation. In other embodiments, operation 802 includes forming a web region of the gear, such as by forming a lattice structure using a LPBF process, which can reduce weight and enable the production of finer and more intricate features with less dimensional variation relative to the AFSD process.

At operation 804, a second gear portion is formed by a second additive manufacturing process. The second additive manufacturing process may be different from the first additive manufacturing process. In some embodiments, operation 804 includes depositing the second gear portion on the first gear portion so that the second gear portion extends from the first gear portion. In some embodiments, operation 804 includes forming a non-interface feature of the gear by a LPBF process. In such embodiments, operation 804 may further include forming at least one feature having a reduced wall thickness relative to the first gear portion (e.g., at least one partition wall and/or lattice structure as described with respect to FIG. 5). In other embodiments, operation 804 includes forming an interface feature of the gear, such as at least a portion of an inner cylindrical wall and an outer cylindrical wall as described with reference to the gear geometry of FIG. 8. In such embodiments, operation 804 may further include forming a portion of the shaft, gear teeth, and/or a coating along the gear.

At optional operation 806, a plurality of teeth are formed into the gear blank. In some embodiments, operation 806 includes subtractively manufacturing the first gear portion and/or the second gear portion, such as by machining the gear blank to remove material from the first gear portion and/or the second gear portion (e.g., to cut teeth into the first gear portion and/or the second gear portion). In other embodiments, the plurality of teeth may be formed directly using an LPBF process without subsequent machining.

At optional operation 808, a third gear portion is formed using a third additive manufacturing process, which may be the same as or different from the first additive manufacturing process or the second additive manufacturing process. In some embodiments, operation 808 includes depositing the third gear portion onto one of the first gear portion or the second gear portion. For example, operation 808 may include depositing material for a second plurality of teeth and/or one of the inner and outer cylindrical walls of the gear described with reference to FIG. 8.

It should be understood that various combinations and alterations of the first additive manufacturing process and the second additive manufacturing process may be used to form different gear geometries. Non-limiting examples of different hybrid manufacturing processes are provided in the paragraphs that follow.

### Example Hybrid Manufacturing Approach Starting with an AFSD Process

A hybrid manufacturing process for a gear according to a first embodiment includes depositing, by an AFSD process, a base material of one metallic alloy (e.g., a first metallic alloy) to form a near complete starting shape for the gear (e.g., a near-net starting shape). In some embodiments, the metallic alloy produced using AFSD includes a carbon alloy steel (e.g., hardened steel, etc.) or another type of gear steel that is commonly used for production of gears. After processing and/or machining, the process includes local deposition of fine features in the same metallic alloy or a different metallic alloy (e.g., a second metallic alloy) using a LPBF process to form a gear blank. In some embodiments, the metallic alloy produced using LPBF includes an LPBF printable gear steel. In some embodiments, these fine features can remain in the as-printed state along the gear. In other embodiments, these fine features can be further processed via machining or another subtractive manufacturing operation (e.g., drilling, cutting, or another material removal operation). After additional processing and/or machining, the method further includes optionally applying and/or depositing local coatings to provide additional toughness, wear resistance, and/or lubricity to the final gear form (e.g., to interface features that engage other components during gear operation).

This first embodiment of the hybrid manufacturing process can be applied to gear part families with one or more set of gear teeth along a shaft with or without a splined connection. The base material formed by the AFSD process provides specific capabilities, such as impact absorption, vibration attenuation and impact resistance while the finer features formed by the LPBF process can form lubrication passages, reduce overall weight, and provide vibration attenuation (damping) onto the gear blank. Additionally, the local coating(s) formed by the AFSD process can provide functionality needed in specific areas of the gear, such as wear resistance, lubricity, etc.

A hybrid manufacturing process for a gear according to a second embodiment includes depositing, by an AFSD process, a base material of one metallic alloy as a near-net starting shape. The process includes depositing, also by an AFSD process, a second metallic alloy to the base material to form a gear blank. After processing and/or machining, the process may include local deposition of fine features in the base material or the second metallic alloy using the same or different metallic alloy by an LPBF process to form further features into the gear blank. These fine features can remain in the as printed state or be further processed. After additional processing and/or machining, local coatings can be applied (e.g., by an AFSD process, etc.) to provide additional toughness, wear resistance, and/or lubricity in specific areas of the gear.

This second embodiment of the hybrid manufacturing process can be applied to gear part families with multiple sets of gear teeth along a shaft with or without a splined connection. The base materials formed by the AFSD process can provide specific capabilities at specific local locations of the gear, such as impact absorption, vibration attenuation, and impact resistance, while the material deposited by the LPBF process provides fine features such as lubrication passages, lightweighting, and vibration attenuation onto the gear blank. The local coating(s) applied using the AFSD process provide functionality needed in specific areas of the gear, such as wear resistance, lubricity, etc.

### Example Hybrid Manufacturing Approach Starting with an LPBF Process

A hybrid manufacturing process for a gear according to a third embodiment includes depositing, by a LPBF process, a base material of one metallic alloy with fine features as a near-net starting shape. After processing and/or machining, an AFSD process is used to locally deposit material of the same metallic alloy or a different metallic alloy to form a gear blank. This deposition builds up near net features with specific material properties to provide specific performance capabilities. These features are subtractively manufactured (e.g., machined, drilled, etc.) and the component is further processed. In such gear geometries, the AFSD process can deposit local coatings to the final part geometry to provide additional toughness, wear resistance, and/or lubricity.

The third embodiment of the hybrid manufacturing approach can be applied to gear part families with one or more sets of gear teeth along a shaft with or without a splined connection. The base material formed by the LPBF process provides fine features (e.g., narrower than a nominal thickness) integrated into the gear blank such as lubrication passages, lightweighting, and vibration attenuation, while the material(s) applied by the AFSD process provide specific capabilities, such as impact absorption, vibration attenuation, and impact resistance. The local coating(s) applied by the AFSD process provide functionality needed in specific areas of the gear, such as wear resistance, lubricity, etc.

A hybrid manufacturing process for a gear according to a fourth embodiment includes depositing, by an LPBF process, a base material of one metallic alloy with fine features as a near-net starting shape. After processing and/or machining, material of the same metallic alloy or a different metallic alloy is deposited locally by an AFSD process to form a gear blank. This deposition builds up near net features with specific material properties to provide specific performance capabilities. After the first deposition by the AFSD process is completed, another AFSD process (which may be the same or different from the first AFSD process) is used to deposit additional material to build up features in a second or third metallic alloy. This deposition builds up near net features with specific material properties to provide specific performance capabilities in specific local areas of the gear. The features from both depositions by the AFSD process are machined and the component is further processes. The AFSD process can also deposit local coatings to the final part geometry to provide additional toughness, wear resistance and/or lubricity.

The hybrid manufacturing process according to the fourth embodiment can be applied to gear part families with multiple sets of gear teeth along a shaft with or without a splined connection. The base material deposited by the LPBF process provides fine features integrated into the gear blank such as lubrication passages, lightweighting, and vibration attenuation. The features applied by the AFSD process in multiple alloys can provide specific capabilities in multiple localized areas of the gear, such as impact absorption, vibration attenuation, and impact resistance. The AFSD process can also deposit local coating(s), which can provide functionality needed in specific areas of the gear, such as wear resistance, lubricity, etc.

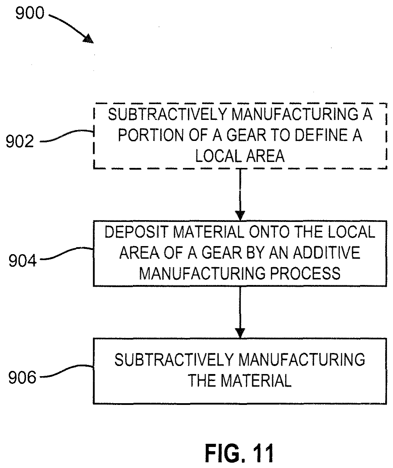

The hybrid manufacturing techniques described herein also enable repair of existing parts without replacing the gear in its entirety. Referring to FIG. 11, a method 900 of gear repair is shown, according to an embodiment. The method 900 may be implemented by one or more controllers of one or more subtractive manufacturing (e.g., machining, drilling, etc.) and/or additive manufacturing systems. In such implementations, the one or more controllers may include memory that stores machine-readable instructions thereon, and a processor communicably coupled to the memory and configured to execute the machine-readable instructions to control operation of the machining and/or additive manufacturing systems (e.g., to carry out machining and/or additive manufacturing operations to repair a gear, etc.). The memory may be a non-transitory computer-readable medium and the controller may be a microprocessor or microcomputer of a manufacturing system. The controller may be configured to cause the manufacturing system or portion thereof to carry out operations (e.g., movement of one or more components) in response to the machine-readable instructions.

At optional operation 902, a worn area or damaged portion of an existing gear is subtractively manufactured to define a local area (e.g., a deposition area, a replacement area, etc.). The gear may have been formed using an additive manufacturing process or by other techniques, such as forging, etc. In some embodiments, operation 902 includes removing material, such as a portion or entirety of the gear teeth, to define the local area. Operation 902 may also include other processing operations, such as grinding, sanding, or other surface preparation for material deposition by additive manufacturing.

At operation 904, material is deposited onto the local area of the gear that was previously occupied by material worn away during operation. Operation 904 includes depositing the material onto the local area by an additive manufacturing process. In some embodiments, operation 904 includes depositing the material across the local area to replace material that was worn away as well as material removed by subtractive manufacturing in operation 902. In other embodiments, operation 904 includes depositing material over existing features of the gear (e.g., worn regions of the gear, etc.) to build back material worn away during operation. In this manner, the newly deposited material replaces the worn-away material that previously occupied a specific location on the gear.

At operation 906, the material is subtractively manufactured or otherwise processed to define a finished portion of the gear, such as at least one of a plurality of gear teeth or another interface or non-interface feature. In some embodiments, operation 906 includes subtractively manufacturing (reductively manufacturing) the material to define a first portion (e.g., a finished portion, an unworn portion, etc.) of the gear having less wear as compared to a second portion (e.g., a worn portion, etc.) of the gear that is disposed at a different location along the gear than the first portion. The result of operation 906 may be a finished gear that has both worn regions (e.g., portions, areas, etc.), such as along interface surfaces (e.g., bearing surfaces, one or more teeth, etc.), and unworn regions where material has been added by the additive manufacturing process.

By way of example, a first example embodiment of a gear repair operation includes utilizing an AFSD process to provide local minor repair to gears. This repair can be used to deposit material in the same metallic alloy or a different metallic alloy than used in the local area of the existing gear. The material deposited by the AFSD process builds back material worn away during normal operation. The deposited material can then be machined back to nominal condition to restore the part to like-new condition. In some embodiments, the AFSD process can be used to deposit material in areas where localized damage has occurred. This damage could be from in-service damage, handling damage, etc. In such instances, the AFSD process can be used to deposit material to fill in the damage either in the same alloy or a different alloy. This deposited material can then be machined back to nominal condition to restore the part to like-new condition.

Such exemplary techniques according to the present disclosure allow for minor repair to gears to be made. This improves upon the current state of the industry, in which, typically, a gear is allowed to accumulate a specific amount of wear, then it is removed from service and replaced with a new component. Among other benefits, the process according to the first embodiment of gear repair provides the capability to return these worn components back to nominal condition so they can be returned to service. The process can greatly simplify the logistics for procurement and extension of service life (sustainment) of gearboxes, as a new gear can take many months or even years to procure, while a repaired gear can be available in approximately one third of the lead time of a new gear.

A second example embodiment of a gear repair operation involves utilizing an AFSD process to provide major repair to gears. In such instances, the process of repair involves removal of local features, via subtractive manufacturing, to return those local features back to the gear blank stage. The AFSD process is then used to locally deposit material to build back the material that was removed. After deposition, the material is machined and processed back to restore the part to like-new condition (e.g., a nominal condition).

Among other benefits, the process according to the second embodiment of gear repair provides the capability to return these worn components back to nominal condition so they can be returned to service. The process also provides the capability to reset a gear that has timed out so that is can be returned to service. This reset is possible through the removal of the material that has accumulated damage through normal operation and replace that material with new material. As noted above, this process can shorten time frames associated with procurement of gearboxes and can prolong their service life.

The various hybrid manufacturing approaches described herein provide various benefits. As a first benefit, the hybrid additive manufacturing approach expands the design space to provide additional design freedom for gear components. This allows for generative design approaches to be used to optimize the part configuration without compromising for subtractive manufacturing challenges. Additionally, the hybrid manufacturing techniques disclosed herein provide the ability to tailor the design *ad hoc* and place specific types of material (e.g., having different material properties) in locations to provide specific benefits needed in that location of the component. For instance, the processes disclosed herein can be used to form a soft core for the gear to absorb impact and attenuate vibration, while simultaneously satisfying specific performance requirements (e.g., for a high hardness, impact resistant, and fatigue tolerant component) at the location of the gear teeth and/or other interface features. The hybrid manufacturing techniques can also provide wear resistance and lubricity along bearing surfaces without altering the structure in other regions of the gear. These competing performance needs can be balanced through local placement of specific materials (e.g., alloys) by the hybrid manufacturing approach. This local placement of a multi-material solution can provide significant improvements in component performance. Moreover, additive manufacturing according to the hybrid manufacturing approaches described herein can produce fine features that are not possible through traditional subtractive manufacturing methods. For example, to meet lubrication and drainage needs, complex passages, holes, and channels can be deposited and produced while reducing the need for subtractive manufacturing. These features can be produced either within the gear blank itself or onto the gear blank as integral features deposited onto the gear blank. Light weight features can be integrated at various locations along the gear, through the incorporation of lattice, gyroid, and/or other structures that can be produced utilizing this hybrid additive manufacturing approach.

As a second benefit, the hybrid manufacturing techniques described herein provide additional benefits to manufacturing through a near net starting point that reduces the amount of material necessary to manufacture a component. Whereas alternative approaches can result in larger materials requirements (e.g., about eight pounds of material needed to produce an approximately one-pound gear), the hybrid manufacturing techniques disclosed herein can reduce that ratio by about half, e.g., about four pounds of material to produce an approximately one-pound gear, or less. Reducing the amount of material used to produce a gear or portion thereof also can reduce the machining time needed to produce the gear. The use of the hybrid manufacturing techniques (e.g., the AFSD process) to apply coatings can also reduce the lead time of part production compared to alternative approaches. Such alternatives often required special coating processes that have long lead times and high costs due to limited supplier options. In contrast, the AFSD process can provide additional coating options with a manufacturing process having higher throughput, reducing lead time and cost for initial manufacture and improved part performance to reduce maintenance. Finally, the hybrid additive manufacturing techniques describe herein can also reduce part count. Such processes provide an integrated solution, which can reduce or eliminate the need to add on parts for specific capabilities. For instance, while alternative approaches often rely on additional components added to the gear to calibrate the component and provide damping, the hybrid manufacturing techniques of the present disclosure apply additional materials directly to the existing gear.

As a third benefit, the hybrid additive techniques disclosed herein allow for sustainment programs that facilitate repairing gears instead of replacing them. The hybrid manufacturing techniques disclosed herein provide capabilities to both repair worn components and to overhaul components that have reached their defined operational life. These new capabilities provide significant lead time and cost savings, as it is much more efficient to re-use the existing component versus alternative approaches that require manufacturing a new component.

As utilized herein with respect to numerical ranges, the terms "approximately," "about," "substantially," and similar terms generally mean ± 5% or ± 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

The term "coupled" and variations thereof, as used herein, means the joining of two members directly or indirectly to one another. Such joining may be stationary (e.g., permanent or fixed) or moveable (e.g., removable or releasable). Such coupling may be mechanical or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Although the figures and description may illustrate a specific order of method steps, the order of such steps may differ from what is depicted and described, unless specified differently above. Also, two or more steps may be performed concurrently or with partial concurrence, unless specified differently above.

It is important to note that any element disclosed in one embodiment may be incorporated or utilized with any other embodiment disclosed herein. The devices and methods described herein may be embodied in other specific forms without departing from the characteristics thereof. The foregoing implementations are illustrative rather than limiting of the described devices and methods. The scope of the devices and methods described herein is thus indicated by the appended claims, rather than the foregoing description, and changes that come within the meaning and range of equivalency of the claims are embraced therein.

## Claims

1. A gear (200, 500, 600), comprising:
a first gear portion (206) having a first material and being formed by a first additive manufacturing process; and
a second gear portion (208) extending from the first gear portion, the second gear portion having a second material and being formed on the first gear portion by a second additive manufacturing process differing from the first additive manufacturing process, at least one of the first gear portion or the second gear portion defining a plurality of teeth (202).

2. The gear of claim 1, wherein the first material is different from the second material.

3. The gear of claim 1 or claim 2, wherein the first additive manufacturing process is an additive friction stir deposition process (300), and the second additive manufacturing process is a laser powder bed fusion process (400).

4. The gear of any one of the preceding claims, wherein the first gear portion defines an interface feature (207) that includes at least one of a shaft (210) or the plurality of teeth, and the second gear portion defines a non-interface feature (209) having a reduced wall thickness relative to a wall thickness of the at least one of the shaft or the plurality of teeth.

5. The gear of any one of the preceding claims, wherein the second gear portion defines a lattice structure (512) defining a plurality of internal cavities (518) therein.

6. The gear of one of claims 1 to 5, wherein the second gear portion defines:
at least one partition wall (520) of an open lubricant reservoir (522) that is configured to collect lubricant; and
at least a portion of a lubrication opening (531) that extends through at least a portion of the second gear portion, and wherein the first gear portion defines a shaft (510), and wherein an open end (524) of the open lubricant reservoir faces along an axial direction (525) relative to a rotational axis (526) of the shaft.

7. The gear of one of claims 1 to 5, wherein the second gear portion defines:
at least one partition wall (520) of an open lubricant reservoir (522) that is configured to collect lubricant; and
at least a portion of a lubrication opening (531) that extends through at least a portion of the second gear portion, wherein the lubrication opening extends at least partially through at least one tooth (502a) of the plurality of teeth to an outer surface of the at least one tooth.

8. The gear of one of claims 1 to 5, wherein the second gear portion defines:
at least one partition wall (530) of an open lubricant reservoir (522) that is configured to collect lubricant; and
at least a portion of a lubrication opening (531) that extends through at least a portion of the second gear portion, wherein the first gear portion defines a shaft (510), and wherein the at least one partition wall is an angled wall that extends away from at least one tooth (502a) of the plurality of teeth toward a rotational axis (526) of the shaft (510).

9. The gear of one of claims 1 to 5, wherein the second gear portion defines:
at least one partition wall (520) of an open lubricant reservoir (522) that is configured to collect lubricant; and
at least a portion of a lubrication opening (531) that extends through at least a portion of the second gear portion, wherein the first gear portion defines a shaft (510), the at least one partition wall disposed radially between an inner perimeter of at least one tooth (502a) of the plurality of teeth and an outer perimeter of the at least one tooth.

10. The gear of one of claims 1 to 5, wherein the second gear portion defines:
at least one partition wall (520) of an open lubricant reservoir (522) that is configured to collect lubricant; and
at least a portion of a lubrication opening (531) that extends through at least a portion of the second gear portion, wherein the first gear portion defines a shaft (510), the at least one partition wall disposed within a web region of the second gear portion between the shaft and at least one tooth (502a) of the plurality of teeth, and wherein the web region comprises a plurality of partition walls that are formed by the second gear portion, the plurality of partition walls together defining the open lubricant reservoir.

11. The gear of any one of the preceding claims, wherein the plurality of teeth is a first plurality of teeth (602), further comprising a third gear portion formed by a third additive manufacturing operation, the third gear portion defining a second plurality of teeth (604) that are spaced apart from the first plurality of teeth.

12. A method (800) of making a gear (200), comprising:
forming a first gear portion (206) using a first material by a first additive manufacturing process;
forming a second gear portion (208) by depositing a second material on the first gear portion using a second additive manufacturing process that is different from the first additive manufacturing process, and such that the second gear portion extends from the first gear portion; and
forming a plurality of teeth (202) into one of the first gear portion or the second gear portion.

13. The method of claim 12, wherein forming the plurality of teeth includes subtractively manufacturing at least one of the first gear portion or the second gear portion.

14. The method of claim 12 or 13, further comprising forming a third gear portion by the first additive manufacturing process, the first gear portion and the third gear portion spaced apart from one another by the second gear portion.

15. A method (900) of repairing a gear (200), comprising:
depositing material onto a local area of the gear by an additive manufacturing process, the local area previously occupied by material worn away during operation; and
subtractively manufacturing the material to define a first portion (206) of the gear having less wear than a second portion (208) of the gear, the second portion of the gear being at a different location of the gear than the first portion.
